# EUROPÄISCHE PATENTSCHRIFT

(11) **EP 0 738 885 B1**
(45) Veröffentlichungstag und Bekanntmachung des Hinweises auf die Patenterteilung: **18.04.2001**
(21) Anmeldenummer: 96103443.6
(22) Anmeldetag: 06.03.1996
(51) Int. Cl.: G01M 1/04, B60B 30/00

(54) **Spannflansch für eine Spannvorrichtung zum Aufspannen von Rädern unterschiedlicher Typen von Kraftfahrzeugen auf eine Welle einer Auswuchtmaschine**
Fixing flange for a mounting device for holding different types of vehicle wheels on the shaft of a balancing machine
Bride de fixation pour un dispositif de fixation de différents types de roues de véhicules sur l'axe d'une machine d'équilibrage

(30) Priorität: 22.04.1995 DE 29506853 U
(43) Veröffentlichungstag der Anmeldung: 23.10.1996
(73) Patentinhaber: HAWEKA Auswuchttechnik Horst Warkotsch GmbH, 30938 Burgwedel (DE)
(72) Erfinder: Warkotsch, Horst, 30938 Burgwedel (DE)
(74) Vertreter: Leine, Sigurd, Dipl.-Ing.

(56) Entgegenhaltungen:
- US-A- 3 916 971
- US-A- 4 381 671
- US-A- 4 478 081

## Beschreibung

Die Erfindung betrifft einen Spannflansch der im Oberbegriff des Anspruchs 1 genannten Art.

Es ist ein Spannflansch der betreffenden Art bekannt, der von der Firma HAWEKA Auswuchttechnik Horst Warkotsch GmbH in 30938 Burgwedel vertrieben wird und für eine Spannvorrichtung zum Aufspannen von Rädern unterschiedlicher Typen von Kraftfahrzeugen auf eine Welle einer Auswuchtmaschine dient. Er weist eine zentrale Führungsbohrung zur axialen Führung des Spannflansches auf der Welle einer Auswuchtmaschine auf und ist mit wenigstens zwei in dem Spannflansch angeordneten Gruppen von achsparallelen Zentrierbohrungen versehen, die auf verschiedenen Kreisen unterschiedlichen Durchmessers und/oder in unterschiedlicher Zahl und in gleichem Umfangsabstand angeordnet sind. Die Lochanordnung entspricht dabei der Lochanordnung in den Felgen von Rädern unterschiedlicher Typen von Kraftfahrzeugen. Außerdem weist der Spannflansch in die Zentrierbohrungen einsetzbare Zentrierstifte auf, deren aus den Zentrierbohrungen herausragenden Enden Zentrierkonen aufweisen.

Die Verwendung dieses bekannten Spannflansches erfolgt in der Weise, daß zunächst Zentrierstifte in die Gruppe von Bohrungen eingesetzt werden, deren Anordnung der Lochanordnung in der Felge eines aufzuspannenden Rades entspricht. Dann wird das aufzuspannende Rad auf die Welle der Auswuchtmaschine geschoben und dabei durch einen auf der Welle verschieblich gelagerten und federbelasteten Konus vorzentriert, der in das zentrale Loch der Felge des aufzuspannenden Rades eingreift. Durch Drücken des Rades gegen diesen Konus erfolgt die Vorzentrierung.

Danach wird der Spannflansch mit seiner zentralen Führungsbohrung auf die Welle der Auswuchtmaschine aufgeschoben und gegen die Felge bewegt, derart, daß die Zentrierkonen der Zentrierstifte in die der Zentrierung dienenden Befestigungslöcher in der Felge des Rades eingreifen. Danach wird eine Spannmutter auf ein auf der Welle der Auswuchtmaschine vorgesehenes Gewinde so weit aufgeschraubt, bis die Rückseite der Felge stramm an einem Anlageflansch zur Anlage kommt, der auf der Welle der Auswuchtmaschine angebracht ist. Durch diesen Anlageflansch erfolgt eine Ausrichtung der Felge in einer Ebene senkrecht zur Achse der Auswuchtmaschine, und durch die in die Zentrierlöcher der Felge eingreifenden Zentrierkonen der Zentrierstifte erfolgt eine radiale Zentrierung.

Soll ein anderer Typ eines Fahrzeugrades aufgespannt werden, so müssen die Zentrierstifte aus den Zentrierbohrungen in dem Spannflansch herausgezogen und in eine andere Gruppe von achsparallelen Zentrierbohrungen in dem Zentrierflansch eingesetzt werden, deren Anordnung der Anordnung der Zentrierlöcher in der Felge des neuen Typs entspricht. Danach erfolgt der Spannvorgang in der zuvor beschriebenen Weise.

Da es eine sehr große Zahl verschiedener Typen von Felgen für Fahrzeugräder gibt, bei denen die Anordnung der Zentrierbohrungen verschieden ist, müssen in dem Zentrierflansch entsprechend viele Gruppen unterschiedlicher Anordnungen von Zentrierbohrungen vorgesehen sein, und zwar einmal auf unterschiedlichen Kreisen und zum andern auch in jeweils unterschiedlicher Zahl. Dadurch ergibt sich in dem Spannflansch eine unübersichtlich große Zahl von Zentrierbohrungen, so daß es schwierig ist, sicher und schnell die jeweils gewünschten Zentrierbohrungen für einen bestimmten Typ einer Felge aufzufinden. Wegen der engen Anordnung ist eine Markierung der Zentrierbohrungen durch Zahlen, Buchstaben oder dergleichen praktisch unmöglich (vgl. US-A-3 916 971, Anspruch 5).

Der Erfindung liegt die Aufgabe zugrunde, einen Spannflansch der betreffenden Art zu schaffen, bei dem das Auffinden der zu einer gewünschten Gruppe gehörenden Zentrierbohrungen für die Zentrierstifte vereinfacht ist.

Die der Erfindung zugrundeliegende Aufgabe wird durch die im Kennzeichen des Anspruchs 1 angegebene Lehre gelöst.

Grundgedanke dieser Lehre ist es, die sichtbaren Enden der Zentrierbohrungen auf der Einsteckseite für die Zentrierstifte so zu gestalten, daß sie dauerhaft und leicht erkennbar durch ihr Aussehen gekennzeichnet sind. Zu diesem Zweck weisen die Enden der Zentrierbohrungen jeweils eine Einsenkung auf, wobei die Einsenkungen einer Gruppe von Zentrierbohrungen untereinander gleiches Aussehen, die Einsenkungen verschiedener Gruppen von Zentrierbohrungen jedoch unterschiedliches Aussehen haben. Dadurch sind die Gruppen von Zentrierbohrungen einfach zu unterscheiden, so daß es ohne weiteres möglich ist, schnell die einer Gruppe von Zentrierbohrungen und damit die einem bestimmten Felgentyp zugeordneten Zentrierbohrungen aufzufinden und in diese Zentrierbohrungen die Zentrierstifte einzusetzen. Da die Oberflächen unterschiedlicher Gestaltung in den Einsenkungen liegen, sind sie weitgehend vor Beschädigungen sicher und damit dauerhaft.

Grundsätzlich kann das unterschiedliche Aussehen der Gruppen von Zentrierbohrungen in beliebiger Weise bewirkt sein. Es ist jedoch besonders zweckmäßig, wenn das unterschiedliche Aussehen durch Form und/oder Tiefe und/oder verschiedenen Durchmesser gegeben ist. Es ist aber auch zweckmäßig, wenn die Einsenkungen verschiedener Gruppen von Zentrierbohrungen eine unterschiedlich farbige Oberfläche haben. Eine zweckmäßige Weiterbildung dieser Ausführungsform besteht darin, daß die Einsenkungen einen konischen inneren Teil und einen sich daran anschließenden äußeren, im wesentlichen zylindrischen Teil aufweisen. Der konische Teil erleichtert das Einsetzen der Zentrierstifte. Der Grund des zylindrischen Teils wird beim Einstecken eines Zentrierstiftes praktisch nicht berührt, so daß in dem zylindrischen Teil eingebrachte oder angebrachte Farbe keiner Beschädigung oder Abnutzung unterliegt.

Anhand der Zeichnung soll die Erfindung an einem Ausführungsbeispiel näher erläutert werden.
- Fig. 1: zeigt in einem halben Axialschnitt eine Spannvorrichtung mit einem Ausführungsbeispiel eines erfindungsgemäßen Spannflansches,
- Fig. 2: zeigt eine etwas vergrößerte Axialansicht des Spannflansches gemäß Fig. 1 und
- Fig. 3: ist ein Schnitt III-III durch Fig. 2.

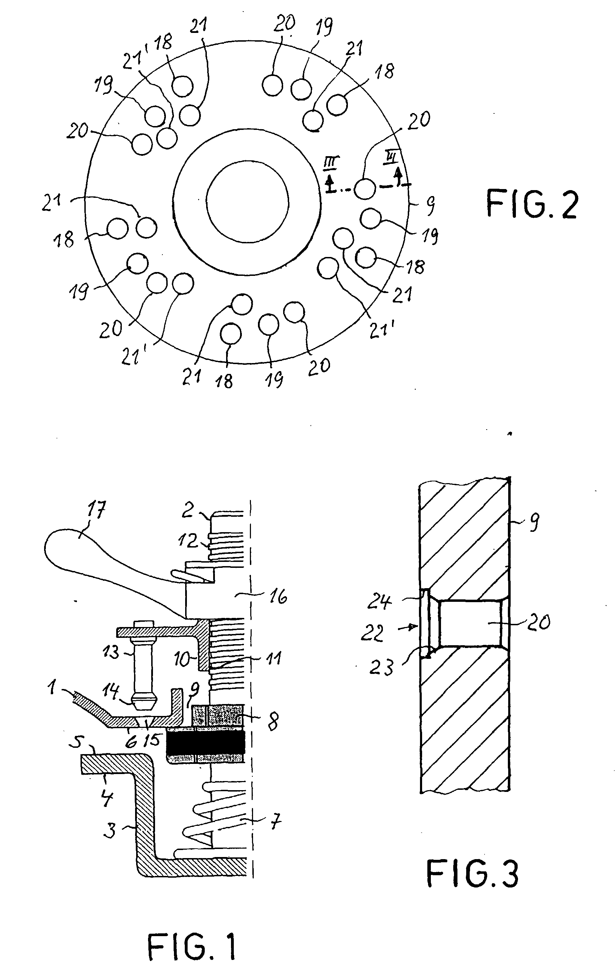

Fig. 1 zeigt zur Hälfte einen Axialschnitt durch eine Spannvorrichtung zum Aufspannen einer nur teilweise dargestellten Felge 1 eines Fahrzeugrades auf eine Welle 2 einer Auswuchtmaschine. Auf der Welle 2 ist ein Topf 3 befestigt, der einen Flansch 4 aufweist, an dessen Anlagefläche 5 im aufgespannten Zustand eine Anlagefläche 6 der Felge 1 zur Anlage kommt. Auf der Welle 2 befindet sich eine Kegelfeder 7, die während des Aufspannens ein Zentrierteil 8 in ein zentrales Loch 9 der Felge 1 drückt und diese dadurch vorzentriert.

Auf der Welle 2 sitzt verschieblich ein Spannflansch 9 mit einem rohrförmigen inneren Teil 10, dessen innere Bohrung 11 mit enger Toleranz verschieblich auf Gewindegängen 12 der Welle 2 aufliegt und so den Spannflansch 9 in jeder Schiebelage in einer Ebene senkrecht zur Welle 2 hält und außerdem radial zentriert.

In dem Spannflansch 9 sind Zentrierstifte 13 eingesetzt, von denen in Fig. 1 nur einer sichtbar ist und die an ihren freien Enden Zentrierkonen 14 aufweisen, die bei einem Zentriervorgang in Zentrierbohrungen 15 eingreifen, von denen in Fig. 1 nur eine sichtbar ist. Zum Spannen der Spannvorrichtung dient eine Spannmutter 16, die zu ihrer Betätigung Handgriffe 17 aufweist.

Fig. 2 zeigt den Spannflansch 9 etwas vergrößert und in Axialansicht, wobei alle anderen Teile einschließlich der Spannstifte 13 weggelassen sind, so daß besonders deutlich die Anordnung von Zentrierbohrungen sichtbar ist. Äußere fünf Zentrierbohrungen 18 bilden eine erste Gruppe. Zentrierlöchern. Es folgen auf Kreisen jeweils kleinerer Durchmesser Gruppen von jeweils fünf Zentrierlöchern 19, 20 und 21. Hinzu kommen zwei Löcher 21', die mit diametral gegenüberliegenden Löchern 21 eine Gruppe von vier Zentrierlöchern bilden können. Die sichtbaren Enden der Zentrierlöcher 18-21, 21' sind von Gruppe zu Gruppe unterschiedlich farblich gekennzeichnet innerhalb von Vertiefungen, wie das nachfolgend anhand von Fig. 3 erläutert wird.

Fig. 3 ist ein Schnitt III-III durch Fig. 2. Es ist im Schnitt die Zentrierbohrung 20 erkennbar, die im Bereich ihres in der Zeichnung linken Endes, das ist die Einsteckseite für die Zentrierstifte 13 (Fig. 1) eine Einsenkung 22 mit einem konischen inneren Teil 23 und einem sich daran anschließenden äußeren zylindrischen Teil 24 aufweist. Die Einsenkung 22 ist insbesondere im Bereich ihres zylindrischen Teils 24 farblich gekennzeichnet. Alle Zentrierbohrungen mit den gleichen Bezugsziffern haben jeweils untereinander eine gleiche Farbkennzeichnung, während die Farbkennzeichnung zwischen den verschiedenen Gruppen verschieden ist. Dadurch ist es möglich, beim Einstecken der Zentrierstifte 13 schnell die zu einer Gruppe gehörenden Zentrierbohrungen aufzufinden.

Von besonderer Bedeutung ist, daß die Einsenkung, das ist bei der Ausführungsform gemäß Fig. 3 insbesondere der zylindrische Teil 24 der Einsenkung 22, eine Vertiefung darstellt, die beim Einstecken der Zentrierstifte 13 praktisch nicht erreichbar ist, so daß auch nicht die Gefahr besteht, daß die Farbkennzeichnung in diesem Bereich beschädigt wird oder im Laufe der Zeit sogar verlorengeht.

## Patentansprüche

1. Spannflansch für eine Spannvorrichtung zum Aufspannen von Rädern unterschiedlicher Typen von Kraftfahrzeugen auf eine Welle einer Auswuchtmaschine,
mit einer zentralen Führungsbohrung zur axialen Führung des Spannflansches auf der Welle einer Auswuchtmaschine,
mit wenigstens zwei in dem Flansch angeordneten Gruppen von achsparallelen Zentrierbohrungen (18-21, 21'), die auf verschiedenen Kreisen unterschiedlichen Durchmessers und/oder in unterschiedlicher Zahl und in gleichem Umfangsabstand angeordnet sind, und
mit in die Zentrierbohrungen einsteckbaren Zentrierstiften (13), deren aus den Bohrungen herausragende Enden Zentrierkonen (14) aufweisen,
**dadurch gekennzeichnet**,
daß die Zentrierbohrungen (18-21, 21') an ihren der Einsteckrichtung der Zentrierstifte (13) entgegengesetzten Enden jeweils eine Einsenkung (22) aufweisen, wobei die Einsenkungen (22) einer Gruppe von Zentrierbohrungen (18-21, 21') untereinander gleiches Aussehen, die Einsenkungen (22) verschiedener Gruppen von Zentrierbohrungen (18-21, 21') jedoch unterschiedliches Aussehen haben.

2. Spannflansch nach Anspruch 1, **dadurch gekennzeichnet**, daß die Einsenkungen von Zentrierbohrungen (18-21, 21') zur Erzeugung eines unterschiedlichen Aussehens verschiedene Form und/oder Tiefe und/oder verschiedenen Durchmesser haben.

3. Spannflansch nach Anspruch 1, **dadurch gekennzeichnet**, daß die Einsenkungen (22) verschiedener Gruppen von Zentrierbohrungen (18-21, 21') eine unterschiedlich farbige Oberfläche haben.

4. Spannflansch nach Anspruch 3, **dadurch gekennzeichnet**, daß die Einsenkungen (22) einen konischen inneren Teil (23) und einen sich daran anschließenden äußeren, im wesentlichen zylindrischen Teil (24) aufweisen.

## Claims

1. Clamping flange for a mounting device for holding different types of vehicle wheels on the shaft of a balancing machine,
having a central guide bore for axially guiding the clamping flange on the shaft of a balancing machine,
having at least two groups of axially parallel centering bores (18-21,21') arranged in the flange, which are arranged in different circles of different diameter and/or in different numbers and in the same peripheral spacing, and
having centering pins (13) which can be inserted into centering bores, the ends of which projecting from the bores having centering cones (14), characterised in that
centering bores (18-21, 21') each have a depression (22) on their ends arranged opposite to the insertion direction of centering pins (13), where depressions (22) of one group of centering bores (18-21,21') all have the same appearance, however depressions (22) of different groups of centering bores (18-21,21') have a different appearance.

2. Clamping flange according to claim 1, characterised in that the depressions of centering bores (18-21,21') have a different shape and/or depth and/or different diameter for producing a different appearance.

3. Clamping flange according to claim 1, characterised in that depressions (22) of different groups of centering bores (18-21,21') have a different coloured surface.

4. Clamping flange according to claim 3, characterised in that depressions (22) have a conical inner part (23) and a there-adjoining outer, essentially cylindrical part (24).

## Revendications

1. Flasque de serrage pour un dispositif de serrage pour brider des roues de différents types de véhicules automobiles sur un arbre d'une machine à équilibrer,
avec un alésage de guidage central pour le guidage axial du flasque de serrage sur l'arbre d'une machine d'équilibrage,
avec au moins deux groupes, disposés dans le flasque, d'alésages de centrage (18-21, 21') à axes parallèles qui sont disposés sur différents cercles de diamètres différents et/ou en nombres différents et à même écartement périphérique et
avec des broches de centrage (13), pouvant être enfoncées dans les alésages de centrage, dont les extrémités faisant saillie hors des alésages présentent des cônes de centrage (14),
caractérisé en ce
que les alésages de centrage (18-21, 21') présentent, à leurs extrémités opposées à la direction d'enfoncement des broches de centrage (13), respectivement une creusure (22), les creusures (22) d'un groupe d'alésages de centrage (18-21, 21') ayant le même aspect entre elles, les creusures (22) de divers groupes d'alésages de centrage (18-21, 21') ayant cependant un aspect différent.

2. Flasque de serrage selon la revendication 1,
caractérisé en ce que les creusures des alésages de centrage (18-21 ; 21'), pour créer un aspect différent, ont une forme et/ou une profondeur différentes et/ou un diamètre différent.

3. Flasque de serrage selon la revendication 1,
caractérisé en ce que les creusures (22) de groupes différents d'alésages de centrage (18-21, 21') ont une surface de couleur différente.

4. Flasque de serrage selon la revendication 3,
caractérisé en ce que les creusures (22) présentent une partie (23) intérieure conique et une partie (24) extérieure s'y raccordant sensiblement cylindrique.
